# EUROPÄISCHE PATENTSCHRIFT

(11) **EP 3 285 559 B1**
(45) Veröffentlichungstag und Bekanntmachung des Hinweises auf die Patenterteilung: **12.06.2019**
(21) Anmeldenummer: 16716212.2
(22) Anmeldetag: 14.04.2016
(51) Int. Cl.: A01B 59/06, A01B 63/112

(54) **ANORDNUNG ZUR ELEKTROHYDRAULISCHEN HUBWERKSREGELUNG, VERFAHREN FÜR EINE DERARTIGE ANORDNUNG UND ZUGMASCHINE**
SYSTEM FOR HYDRAULICALLY CONTROLLING A LIFTING MECHANISM, A METHOD FOR SUCH A SYSTEM AND A TRACTIVE UNIT
ENSEMBLE DE LEVAGE ÉLECTROHYDRAULIQUE, PROCÉDÉ DESTINÉ À UN TEL ENSEMBLE ET MACHINE DE TRACTION

(30) Priorität: 24.04.2015 DE 102015207522
(43) Veröffentlichungstag der Anmeldung: 28.02.2018
(73) Patentinhaber: Robert Bosch GmbH, 70442 Stuttgart (DE)
(72) Erfinder: BUCHTALA, Boris, 75417 Muehlacker (DE); FASSNACHT, Jochen, 75365 Calw (DE)
(74) Vertreter: Thürer, Andreas
(86) Internationale Anmeldenummer: PCT/EP2016/058166
(87) Internationale Veröffentlichungsnummer: WO 2016/169829

(56) Entgegenhaltungen:
- EP-A1- 2 016 818
- WO-A1-2013/053645

## Beschreibung

### Gebiet der Erfindung

Die Erfindung betrifft eine Anordnung zur elektrohydraulischen Hubwerksregelung (EHR) eines Anbaugeräts für eine Arbeitsmaschine. Des Weiteren betrifft die Erfindung ein Verfahren zur elektrohydraulischen Hubwerksregelung. Außerdem betrifft die Erfindung eine Zug- bzw. Arbeitsmaschine mit einer EHR.

### Hintergrund der Erfindung

Zum Verbinden eines Anbaugeräts, beispielsweise eines Pfluges, mit einer Zugmaschine, beispielsweise einem Traktor, weist die Zugmaschine ein Hubwerk auf. Das Hubwerk ist beispielsweise als Drei-Punkt-Kraftheber mit einem Oberlenker und Unterlenkern ausgebildet. Über Kraftmessbolzen der Unterlenker wird bei der EHR die Zugkraft des Pfluges gemessen. Die Messung der Zugkraft wird benötigt, damit auch vergleichsweise kleine und vergleichsweise mittelgroße Traktoren durch vergleichsweise große Pflüge nicht überlastet oder beim Pflügen ausgebremst bzw. abgewürgt werden. Falls beim Pflügen die Zugkraft des Pfluges zu groß wird, so wird der Pflug einfach etwas aus einem Boden oder zu pflügenden Ackerboden von der EHR ausgehoben, womit die Zugkraft wieder sinkt. Bei sinkender Zugkraft wird der Pflug entsprechend weiter abgesenkt, so dass die Zugkraft steigt. Mit dieser Regelung der Zugkraft kann bei inhomogenen Böden der Traktor bei der Bodenbearbeitung optimal ausgelastet werden. Des Weiteren können auch Bodenwellen ausgeglichen werden, da bei einem zu starken Eintauchen des Pfluges in den Boden die Zugkraft steigt, und der Pflug aufgrund der EHR somit angehoben wird.

Eine weitere Ausführungsform einer EHR ist in der DE 26 38 378 offenbart. EP-A-2 016 818 offenbart eine Anordnung gemäß dem ersten Teil des Anspruchs 1.

### Offenbarung der Erfindung

Aufgabe der vorliegenden Erfindung ist es, eine Anordnung zur elektrohydraulischen Hubwerksregelung (EHR) zu schaffen, die vorrichtungstechnisch einfach ausgestaltet und kostengünstig ist. Des Weiteren ist es Aufgabe der Erfindung, ein einfaches Verfahren für eine EHR vorzusehen. Außerdem soll eine Zugmaschine mit EHR geschaffen werden, die vorrichtungstechnisch einfach ausgestaltet und kostengünstig ist.

Die Aufgabe wird gelöst hinsichtlich der Anordnung gemäß den Merkmalen des Anspruchs 1, hinsichtlich der Zugmaschine gemäß den Merkmalen des Anspruchs 7 und hinsichtlich des Verfahrens gemäß den Merkmalen des Anspruchs 8.

Vorteilhafte Weiterbildungen der Erfindung sind Gegenstand der Unteransprüche.

Es ist eine Anordnung zur elektrohydraulischen Hubregelung (EHR) oder ein Hubwerk mit einer EHR vorgesehen. Die EHR dient zur Hubregelung eines Anbaugeräts für eine Zugmaschine, insbesondere für einen Traktor. Vorteilhafterweise ist ein Drucksensor vorgesehen. Mit diesem ist ein Druck eines Hydrozylinders, insbesondere eines hydraulischen Oberlenkers des Hubwerks, erfassbar. Mit dem vom Drucksensor erfassten Druck wird die Zugkraft des Anbaugeräts ermittelt.

Es hat sich gezeigt, dass, insbesondere bei kleinen Anbaugeräten, der vom Drucksensor erfasste Druck proportional zur Kraft, insbesondere im Oberlenker, und somit proportional zur Zugkraft des Anbaugeräts, insbesondere eines Pfluges, ist. Somit kann kostengünstig und vorrichtungstechnisch einfach die Zugkraft, insbesondere bei kleinen und mittleren Traktoren, über den Druck im Hydrozylinder des Oberlenkers ermittelt werden, der von dem Drucksensor gemessen ist.

Der vom Drucksensor gemessene Druck wird zu einem Steuergerät der Anordnung geführt. Dieses ist derart eingerichtet, sein, dass es aus dem Druck die Zugkraft des Anbaugeräts oder Pfluges ermittelt. Da ein Steuergerät üblicherweise bei einer Zugmaschine vorhanden ist, ist denkbar, auf dieses kostengünstig bei der Anordnung zur EHR zurückzugreifen.

Bevorzugterweise ist mit dem Hydrozylinder eine axiale Länge des Oberlenkers einstellbar oder verstellbar.

Vorzugsweise berücksichtigt das Steuergerät eine Kolbenfläche eines Kolbens des Hydrozylinders, die einen Druckraum begrenzt, dessen Druck vom Drucksensor gemessen ist, womit vorteilhafterweise unterschiedliche Größen von Hydrozylindern von dem Steuergerät berücksichtigt werden können.

In weiterer Ausgestaltung der Erfindung kann die Anordnung ein Hubwerk oder einen Drei-Punkt-Kraftheber aufweisen. Hierbei sind vorzugsweise zumindest ein verschwenkbarer Unterlenker und ein verschwenkbarer den Hydrozylinder aufweisender Oberlenker vorgesehen. An die Lenker kann das Anbaugerät oder der Pflug ankoppelbar sein. Vorzugsweise wird mit dem Hubwerk ein Abstand des Anbaugeräts zu einem Boden oder zu einem Ackerboden oder zu einer Oberfläche eingestellt oder verstellt. Durch die erfindungsgemäße Anordnung ist denkbar, auch herkömmliche Hubwerke, die in einen Oberlenker mit einem Hydrozylinder aufweisen, mit einem Drucksensor vorrichtungstechnisch einfach und kostengünstig nachzurüsten, um eine EHR vorzusehen. Die Kombination des Drucksensors mit dem Hubwerk führt somit zu einer äußerst kostengünstigen und vorrichtungstechnisch einfach ausgestalteten Anordnung.

Zum Heben und Senken des Hubwerks kann ein weiterer Hydrozylinder vorgesehen sein, der vorteilhafterweise in Abhängigkeit der über den Drucksensor ermittelten Zugkraft, insbesondere vom Steuergerät, betätigbar ist.

Mit Vorteil kann der Drucksensor den Druck, insbesondere direkt, an dem Druckraum abgreifen, der von dem Kolben des Hydrozylinders begrenzt ist, was zu einer kompakten Ausgestaltung führt und den Druck äußerst dynamisch messbar macht. Alternativ oder zusätzlich ist denkbar, dass der Drucksensor den Druck an einem zu dem Druckraum führenden Strömungspfad oder einer Zuleitung abgreift. Somit kann der Druck auch in einer Ventilscheibe oder einem Ventilblock oder in einer traktorseitig ausgehenden Zuleitung gemessen werden, weshalb der Drucksensor nicht am Hydrozylinder angeordnet werden muss. Hierdurch können beliebige Hydrozylinder für den Oberlenker als Kraftsensoren eingesetzt werden. Greift der Drucksensor den Druck direkt am Druckraum des Hydrozylinders ab, so kann er mechanisch mit dem Hydrozylinder fest verbunden sein und eine einfach handhabbare Einheit mit diesem bilden.

Wie vorstehen bereits erläutert kann der Druck an einer Ventilscheibe oder an einem Ventilblock, an die oder an dem der Hydrozylinder angeschlossen ist, vom Drucksensor abgegriffen sein, wodurch der Drucksensor zugmaschinenseitig anordbar ist.

Vorteilhafterweise kann eine Längenregelung für den Hydrozylinder des Oberlenkers vorgesehen sein, um eine Länge des Oberlenkers einfach einstellen zu können und/oder die Länge im Betrieb der Zugmaschine zumindest im Wesentlichen konstant zu halten. Für die Längenregelung kann ein Wegmesssystem vorgesehen sein, das einen Verschiebeweg und/oder eine Verschiebegeschwindigkeit des Kolbens oder einer Kolbenstange des Hydrozylinders misst. Die Längenregelung kann vorrichtungstechnisch einfach über das Steuergerät erfolgen.

Der vom Drucksensor erfasste Druck ist vorzugsweise vom ersten Druckraum des Hydrozylinders erfasst, wobei der erste Druckraum derjenige ist, bei dem der Druck bei einer Erhöhung der Zugkraft steigt. Alternativ ist denkbar, dass der vom Drucksensor erfasste Druck vom zweiten Druckraum des Hydrozylinders abgegriffen ist, wobei bei dem zweiten Druckraum der Druck bei einer Erhöhung der Zugkraft sinkt. Hierbei ist der Druck dann etwa invers proportional zur Zugkraft.

In weiterer Ausgestaltung der Erfindung können der erste und/oder der zweite Druckraum des Hydrozylinders über ein jeweiliges Ventil oder ein gemeinsames Ventil absperrbar sein. Hierdurch kann beispielsweise vorrichtungstechnisch einfach von einem Nutzer oder von einem Bediener des Hubwerks vor Beginn des Einsatzes des Anbaugeräts oder der Pfluges manuell bzw. über den Hydraulikblock die Länge des Oberlenkers eingestellt werden und im Anschluss können die Ventile geschlossen werden, um ein bestimmtes Ölvolumen einzuschließen.

Des Weiteren kann vorteilhafterweise vorgesehen sein, dass das Steuergerät derart eingerichtet ist, dass es bei einer Ermittlung der Zugkraft eine Gewichtskraft des Anbaugeräts berücksichtigt. Somit kann ein eventueller Druckoffset der Zugkraft durch eine Übertragung von Gewichtskraft vom Anbaugerät auf den Traktor herausgerechnet werden. Vorzugsweise ist bei einem Verfahren für eine Anordnung gemäß einem der vorhergehenden Aspekte vorgesehen, folgende Schritte auszuführen:
- Erfassen der Drucks des Hydrozylinders, insbesondere des Oberlenkers,
- Berechnung oder Ermittlung der Zugkraft des Anbaugeräts anhand des erfassten Drucks, insbesondere über das Steuergerät.

Mit dem Verfahren kann somit äußerst einfach die Zugkraft ermittelt werden, die für die weitere elektrohydraulische Hubwerksregelung verwendet wird.

Nach Ermittlung oder Berechnung der Zugkraft kann über die Hubwerksregelung ein Hub des Anbaugeräts eingestellt werden.

Zur Ermittlung der Gewichtskraft des Anbaugeräts kann auf einfache Weise der Druck des Hydrozylinders erfasst werden, wenn das an das Hubwerk angekoppelte Anbaugerät vom Boden abgehoben ist und/oder wenn das an das Hubwerk angekoppelte Anbaugerät nicht im Arbeitseingriff mit dem Boden ist und/oder wenn das an das Hubwerk angekoppelte Anbaugerät im Wesentlichen auf einer Oberfläche des Bodens aufliegt und somit nicht eingetaucht ist. Somit kann der eventuelle Druckoffset durch die Übertragung der Gewichtskraft vom Anbaugerät auf den Traktor durch eine Nullung bei ausgehobenem Pflug, wobei keine Zugkraft wirkt, herausgerechnet werden. Hierfür kann eine Bedienperson der Anordnung vor Beginn einer Boden- oder Ackerbearbeitung den Pflug ausheben und beispielsweise eine Taste zur Nullung betätigen. Alternativ kann die Anordnung oder das Verfahren im Vorgewende bei ausgehobenem Pflug die Nullung automatisch vornehmen. Ein Hub oder eine Lage des Hubwerks wird vorzugsweise gemessen. Hierdurch kann eine Elektronik oder das Steuergerät sicher erkennen, ob der Pflug ausgehoben ist. Werden vor Beginn der Arbeit von der Bedienperson, wie vorstehend erläutert, die Druckräume des Hydrozylinders des Oberlenkers abgesperrt, so kann bei ausgehobenem Pflug, ebenfalls wie vorstehend erläutert, eine Nullung vorgenommen werden. Bei modernen Anbaugeräten mit ISO-Bus-Ankopplung kann das Anbaugerät sich selbst an der Arbeitsmaschine anmelden. Somit kann gegebenfalls auch eine Gewichtskraft des Anbaugeräts in Steuergerät hinterlegt werden.

Vorzugsweise wird bei der Ermittlung oder Berechnung der Zugkraft eine Kolbenfläche des Kolbens des Hydrozylinders des Oberlenkers berücksichtigt, die den Druckraum begrenzt, dessen Druck für die Berechnung der Zugkraft herangezogen wird. Zusätzlich oder alternativ kann vorteilhafterweise ein Durchmesser des Hydrozylinders des Oberlenkers bei der Berechnung der Zugkraft berücksichtigt werden. Es ist denkbar, dass die Kolbenfläche und/oder der Durchmesser dem Steuergerät von der Bedienperson vorgegeben werden, beispielsweise über ein Benutzerinterface. Denkbar wäre auch, dass die Daten, insbesondere von dem Steuergerät, automatisch erkannt werden, beispielsweise über Auslesen eines Codes, der am Hydrozylinder oder Anbaugerät hinterlegt ist. Hierzu könnte beispielhaft der ISO-Bus genutzt werden, falls der Oberlenker mit einem entsprechenden Interface ausgerüstet ist.

Eine gewünschte Länge des Oberlenkers wird vorzugweise von der Bedienperson vorgegeben, beispielsweise über ein Benutzerinterface. Hierdurch kann die Länge des Hydrozylinders über die Längenregelung wie gewünscht geregelt oder eingestellt werden. Mit Vorteil wird die Länge vor Beginn des Pflügens mit dem Pflug eingegeben. Alternativ ist denkbar, dass die Länge beispielsweise über einen Code, der am Anbaugerät hinterlegt ist, insbesondere vom Steuergerät, automatisch erkannt wird.

### Kurze Beschreibung der Zeichnungen

Ein bevorzugtes Ausführungsbeispiel der Erfindung wird im Folgenden anhand von Zeichnungen näher erläutert. Es zeigen:
Figur 1 in einer schematischen Darstellung Zugmaschine mit einer Anordnung zur elektrohydraulischen Hubregelung und
Figur 2 in einem Ablaufdiagram ein Verfahren für die Anordnung.

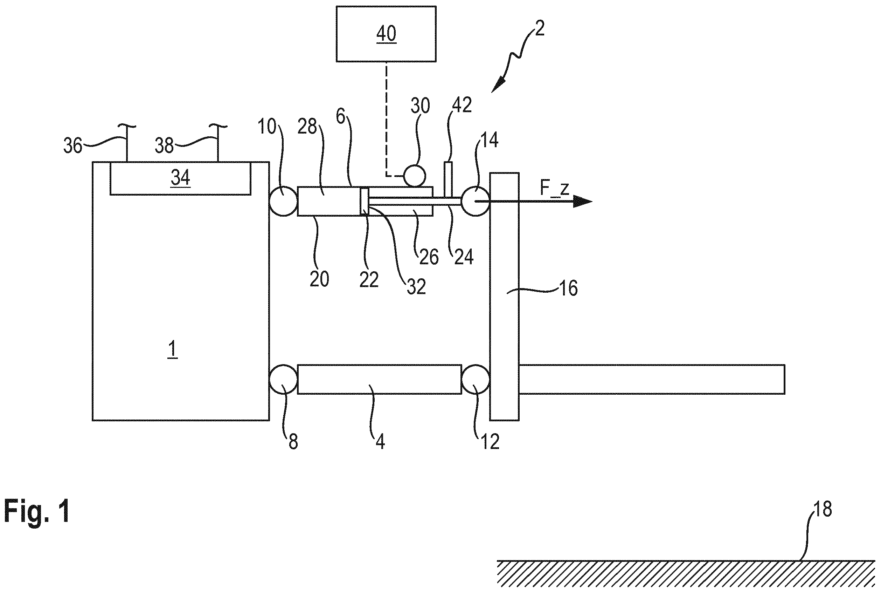

Eine Zugmaschine 1 in der Figur 1 ist in Form eines kleinen oder mittelgroßen Traktors ausgebildet. Die Zugmaschine 1 hat eine Anordnung 2 zur elektrohydraulischen Hubwerksregelung (EHR). Die Anordnung 2 hat ein Hubwerk mit zwei Unterlenkern 4 und einem Oberlenker 6. Die Lenker 4 und 6 sind jeweils über eine Schwenkachse 8 und 10 mit der Zugmaschine 1 verbunden. Die Schwenkachsen 8 und 10 erstrecken sich hierbei etwa in Parallelabstand zu einer nicht dargestellten Antriebsachse der Zugmaschine 1. Die Lenker 4 und 6 sind des Weiteren über Koppelelemente 12 und 14 mit einem Anbaugerät 16 in Form eines Pfluges verbunden. Über einen in der Figur nicht dargestellten Hydrozylinder sind die Lenker 4 und 6 um ihre Schwenkachsen 8, 10 verschwenkbar, womit ein Abstand des Anbaugeräts 16 zu einem Boden oder Ackerboden 18 einstellbar oder verstellbar ist.

Der Oberlenker 6 weist einen Hydrozylinder 20 auf. Dieser hat einen Kolben 22, der mit einer Kolbenstange 24 verbunden ist und einen ersten Zylinderraum 26 oder Druckraum von einem zweiten Zylinderraum 28 oder Druckraum trennt. Die Kolbenstange 24 ist mit dem Koppelelement 14 verbunden. Mit dem Hydrozylinder 20 kann eine Länge des Oberlenkers 6 eingestellt werden. Wird beispielsweise Druckmittel aus dem ersten Zylinderraum 26 entlassen und in den zweiten Zylinderraum 28 beschickt, so verschiebt sich der Kolben 22 in Richtung einer Verkleinerung des ersten Zylinderraums 26, womit die Länge des Oberlenkers 6 vergrößert wird. Umgekehrt führt eine Entlassung von Druckmittel aus dem zweiten Zylinderraum 28 und eine Beschickung von Druckmittel in den ersten Zylinderraum 26 zu einer Verschiebung des Kolbens 22 in Richtung einer Vergrößerung des ersten Zylinderraums 26, womit die Länge des Oberlenkers 6 verkleinert wird. Vorteilhafterweise ist ein Drucksensor 30 vorgesehen, mit dem ein Druck im ersten Zylinderraum 26 erfassbar ist. Steigt beispielsweise eine auf den Oberlenker 6 wirkende Zugkraft F_z vom Anbaugerät 16, so steigt ein Druck im ersten Zylinderraum 26, der von einer Kolbenfläche 32 des Kolbens 22 begrenzt ist, die zum Koppelelement 14 weist. Sinkt die Zugkraft F_z, so sinkt auch der Druck im ersten Zylinderraum 26. Über den vom Drucksensor 30 erfassten Druck im ersten Zylinderraum 26 kann somit auf die Zugkraft F_z geschlossen werden.

In der Figur 1 ist schematisch eine Ventilscheibe 34 gezeigt, die über einen ersten Strömungspfad 36 mit dem ersten Zylinderraum 26 und über einen zweiten Strömungspfad 38 mit dem zweiten Zylinderraum 28 verbunden ist. Über zumindest ein Ventil der Ventilscheibe 34 sind die Zylinderräume 26 und 28 wechselseitig mit einer Druckmittelquelle und einer Druckmittelsenke verbindbar oder absperrbar. Der Drucksensor 30 kann den Druck im ersten Zylinderraum 26 auch im ersten Strömungspfad 36 oder in der Ventilscheibe 34 abgreifen.

Der vom Drucksensor 30 erfasste Druck wird einem Steuergerät 40 gemeldet, das dann anhand des Drucks die Zugkraft F_z ermittelt und daraus den Abstand des Anbaugeräts 16 zum Ackerboden 18 regelt.

Mit der Messung der Zugkraft über die Anordnung 2 gemäß der Figur 1 kann vermieden werden, dass die Zugmaschine 1 durch das Anbaugerät 16 überlastet oder ausgebremst wird. Falls beim Pflügen die Zugkraft F_z des Anbaugeräts 16 in Form des Pfluges zu groß wird, so wird dies über den ansteigenden Druck von dem Steuergerät 40 erkannt, und der Pflug vom Ackerboden 18 etwas ausgehoben, womit die Zugkraft F_z sinkt. Bei sinkender Zugkraft F_z wird der Pflug entsprechend weiter in den Ackerboden 18 abgesenkt, so dass die Zugkraft F_z steigt. Entsprechend können beispielsweise auch Bodenwellen ausgeglichen werden, da bei einem zu starken Eintauchen des Pfluges in den Ackerboden 18 die Zugkraft F_z steigt und der Pflug somit aufgrund des vom Steuergerät 40 erkannten ansteigenden Drucks angehoben wird.

Eine Bedienperson der Zugmaschine 1 kann bei der Anordnung 2 zu Beginn eines Einsatzes des Anbaugeräts 16 manuell eine gewünschte Länge des Oberlenkers 6 der Steuerung 40 vorgeben, so dass diese die Länge über eine Längenregelung einstellen kann. Für die Längenregelung ist vorzugsweise ein Wegmesssystem 42 für die Kolbenstange 24 vorgesehen, das mit dem Steuergerät 40 verbunden ist. Soll keine Längenregelung erfolgen, so kann ein Bediener die gewünschte Länge des Oberlenkers 6 durch hydraulisches Bewegen des Kolbens 22 einstellen und im Anschluss die Strömungspfade 36 und 38 absperren.

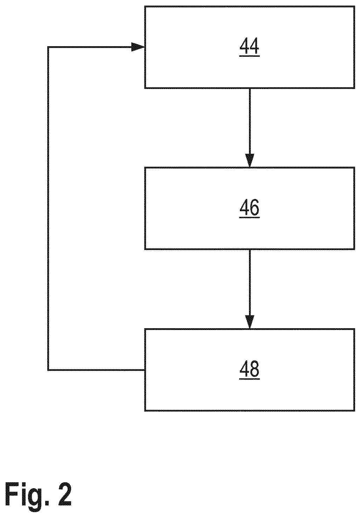

Gemäß Figur 2 ist das Verfahren für die Anordnung schematisch dargestellt. In einem ersten Schritt 44 wird der Druck des Hydrozylinders 20 des Oberlenkers 6 aus Figur 1 erfasst. Anschließend in einem zweiten Schritt 46 wird die auf den Oberlenker wirkende Zugkraft anhand des erfassten Drucks über das Steuergerät 40 auf Figur 1 ermittelt. In einem dritten Schritt 48 wird bei Bedarf ein Hub des Anbaugeräts 16 anhand der ermittelten Zugkraft vom Steuergerät 40 verstellt. Diese Schritte 44 bis 48 werden beispielsweise periodisch wiederholt oder ohne Unterbrechung durchgeführt.

Offenbart ist eine Zugkraftmessung durch einen Drucksensor in einem hydraulischem Oberlenkerzylinder eines Hubwerks, an das ein Anbaugerät ankoppelbar ist, und das Teil einer Zugmaschine sein kann.

### Bezuaszeichenliste

- 1: Zugmaschine
- 2: Anordnung zur EHR
- 4: Unterlenker
- 6: Oberlenker
- 8: Schwenkachse
- 10: Schwenkachse
- 12: Koppelelement
- 14: Koppelelement
- 16: Anbaugerät
- 18: Ackerboden
- 20: Hydrozylinder
- 22: Kolben
- 24: Kolbenstange
- 26: erster Zylinderraum
- 28: zweiter Zylinderraum
- 30: Drucksensor
- 32: Kolbenfläche
- 34: Ventilscheibe
- 36: erster Strömungspfad
- 38: zweiter Strömungspfad
- 40: Steuergerät
- 42: Wegmesssystem
- 44: erster Schritt
- 46: zweiter Schritt
- 48: dritter Schritt

## Patentansprüche

1. Anordnung zur elektrohydraulischen Hubwerksregelung (EHR) eines Anbaugeräts (16) für eine Zugmaschine (1), wobei ein Drucksensor (30) vorgesehen ist, wobei mit dem Drucksensor (30) ein Druck eines Hydrozylinders (20) eines Oberlenkers (6) erfassbar ist, **dadurch gekennzeichnet, dass** der vom Drucksensor (30) erfasste Druck zu einem Steuergerät (40) gemeldet ist, das derart eingerichtet ist, dass aus dem Druck eine Zugkraft ermittelbar ist und dass anhand der Zugkraft der Hub des Anbaugeräts (16) von dem Steuergerät (40) einstellbar ist.

2. Anordnung nach Anspruch 1, wobei mindestens ein verschwenkbarer Unterlenker (4) und ein verschwenkbarer den Hydrozylinder (20) aufweisender Oberlenker (6) vorgesehen ist, an die das Anbaugerät (16) ankoppelbar ist, wobei mit dem Hydrozylinder (20) eine axiale Länge des Oberlenkers (6) einstellbar ist.

3. Anordnung nach einem der vorhergehenden Ansprüche, wobei der Drucksensor (30) den Druck an einem Druckraum (26) abgreift, der von einem Kolben (22) des Hydrozylinders (20) begrenzt ist, und/oder wobei der Drucksensor (30) den Druck an einem zu einem Druckraum (26), der von einem Kolben (22) des Hydrozylinders (20) begrenzt ist, führenden Strömungspfad (36) abgreift, und/oder wobei der Druck an einer Ventilscheibe (34), an die der Hydrozylinder (20) angeschlossen ist, abgegriffen ist.

4. Anordnung nach einem der vorhergehenden Ansprüche, wobei der Drucksensor (30) mit dem Hydrozylinder (20) mechanisch verbunden ist.

5. Anordnung nach einem der vorhergehenden Ansprüche, wobei eine Längenregelung für den Hydrozylinder (20) des Oberlenkers (6) vorgesehen ist.

6. Anordnung nach einem der Ansprüche 2 bis 5, wobei das Steuergerät (40) derart eingerichtet ist, dass bei der Berechnung der Zugkraft eine Gewichtskraft des Anbaugeräts (16) berücksichtigt ist.

7. Zugmaschine mit einer Anordnung zur EHR gemäß einem der vorhergehenden Ansprüche.

8. Verfahren für eine Anordnung zur EHR gemäß einem der Ansprüche 1 bis 6 mit den Schritten:
- Erfassen des Drucks des Hydrozylinders (20) des Oberlenkers (6),
- Ermittlung der auf den Oberlenker (6) wirkenden Zugkraft anhand des erfassten Drucks über das Steuergerät (40),
- Einstellen eines Hubs des Anbaugeräts (16) anhand der ermittelten Zugkraft.

9. Verfahren nach Anspruch 8, wobei zur Ermittlung der Gewichtskraft des Anbaugeräts (16) der Druck des Hydrozylinders (20) erfasst wird, wenn das angekoppelte Anbaugerät (16) vom Boden (18) abgehoben ist und/oder wenn das angekoppelte Anbaugerät (16) nicht in Arbeitseingriff mit dem Boden (18) ist und/oder wenn das an das Hubwerk angekoppelte Anbaugerät (16) im Wesentlichen auf einer Oberfläche des Ackerbodens (18) aufliegt.

10. Verfahren nach Anspruch 9, wobei eine Kolbenfläche (32) Kolbens (22) des Hydrozylinders (20) des Oberlenkers (6), die den Druckraum (26) begrenzt, dessen Druck für die Berechnung der Zugkraft herangezogen wird, bei der Berechnung der Zugkraft berücksichtigt wird, und/oder wobei ein Durchmesser des Hydrozylinders (20) des Oberlenkers (6) bei der Berechnung der Zugkraft berücksichtigt wird.

11. Verfahren nach einem der Ansprüche 8 bis 10, wobei eine Länge des Oberlenkers (6) von einer Bedienperson vorgegeben wird und/oder wobei eine Länge des Oberlenkers (6) von dem Steuergerät (40) erkannt wird.

## Claims

1. System for the electro-hydraulic control (EHR) of a lifting mechanism of an implement (16) for a traction machine (1) a pressure sensor (30) being provided, the pressure of a hydraulic cylinder (20) of an upper link (6) being measurable by the pressure sensor (30), **characterized in that** the pressure measured by the pressure sensor (30) is reported to a control device (40), which is set up in such a way that a tensile force can be determined from the pressure, and **in that** by using the tensile force, the lift of the implement (16) is adjustable by the control device (40).

2. System according to Claim 1, wherein at least one pivotable lower link (4) and a pivotable upper link (6) having the hydraulic cylinder (20) to which the implement (16) can be coupled are provided, an axial length of the upper link (6) being adjustable by the hydraulic cylinder (20).

3. System according to one of the preceding claims, wherein the pressure sensor (30) taps off the pressure on a pressure chamber (26) which is delimited by a piston (22) of the hydraulic cylinder (20), and/or wherein the pressure sensor (30) taps off the pressure on a flow path (36) leading to a pressure chamber (26) which is delimited by a piston (22) of the hydraulic cylinder (20), and/or wherein the pressure is tapped off on a valve disc (34) to which the hydraulic cylinder (20) is connected.

4. System according to one of the preceding claims, wherein the pressure sensor (30) is connected mechanically to the hydraulic cylinder (20).

5. System according to one of the preceding claims, wherein length control for the hydraulic cylinder (20) of the upper link (6) is provided.

6. System according to one of Claims 2 to 5, wherein the control device (40) is set up in such a way that, when calculating the tensile force, a weight of the implement (16) is taken into account.

7. Traction machine having a system for EHR according to one of the preceding claims.

8. Method for a system for EHR according to one of Claims 1 to 6, comprising the steps:
- measuring the pressure of the hydraulic cylinder (20) of the upper link (6),
- determining the tensile force acting on the upper link (6) by using the measured pressure, via the control device (40),
- adjusting a lift of the implement (16) by using the tensile force determined.

9. Method according to Claim 8, wherein, to determine the weight of the implement (16), the pressure of the hydraulic cylinder (20) is measured when the coupled implement (16) is lifted off the ground (18) and/or when the coupled implement (16) is not in working engagement with the ground (18) and/or when the implement (16) coupled to the lifting mechanism is substantially resting on a surface of the field ground (18).

10. Method according to Claim 9, wherein a piston area (32) of the piston (22) of the hydraulic cylinder (20) of the upper link (6), which delimits the pressure chamber (26), the pressure of which is used for the calculation of the tensile force, is taken into account in the calculation of the tensile force, and/or wherein a diameter of the hydraulic cylinder (20) of the upper link (6) is taken into account in the calculation of the tensile force.

11. Method according to one of Claims 8 to 10, wherein a length of the upper link (6) is predefined by an operator and/or wherein a length of the upper link (6) is detected by the control device (40).

## Revendications

1. Système de régulation électrohydraulique (EHR) d'un mécanisme de levage d'un appareil rapporté (16) pour une machine de traction (1), dans lequel il est prévu un capteur de pression (30), dans lequel une pression d'un cylindre hydraulique (20) d'une bielle supérieure (6) peut être détectée avec le capteur de pression (30), **caractérisé en ce que** la pression détectée avec le capteur de pression (30) est transmise à un appareil de commande (40), qui est configuré de telle manière qu'une force de traction puisse être déterminée à partir de la pression et que la course de l'appareil rapporté (16) puisse être réglée par l'appareil de commande (40) à l'aide de la force de traction.

2. Système selon la revendication 1, dans lequel il est prévu au moins une bielle inférieure pivotante (4) et une bielle supérieure pivotante (6) présentant le cylindre hydraulique (20), auxquelles l'appareil rapporté (16) peut être couplé, dans lequel une longueur axiale de la bielle supérieure (6) peut être réglée avec le cylindre hydraulique (20).

3. Système selon l'une quelconque des revendications précédentes, dans lequel le capteur de pression (30) relève la pression à une chambre de pression (26), qui est limitée par un piston (22) du cylindre hydraulique (20), et/ou dans lequel le capteur de pression (30) relève la pression à un chemin d'écoulement (36) conduisant à une chambre de pression (26), qui est limitée par un piston (22) du cylindre hydraulique (20), et/ou dans lequel la pression est relevée à un disque de soupape (34), qui est raccordé au cylindre hydraulique (20) .

4. Système selon l'une quelconque des revendications précédentes, dans lequel le capteur de pression (30) est assemblé mécaniquement au cylindre hydraulique (20).

5. Système selon l'une quelconque des revendications précédentes, dans lequel il est prévu une régulation de longueur pour le cylindre hydraulique (20) de la bielle supérieure (6).

6. Système selon l'une quelconque des revendications 2 à 5, dans lequel l'appareil de commande (40) est configuré de façon à tenir compte d'un poids de l'appareil rapporté (16) lors du calcul de la force de traction.

7. Machine de traction munie d'un système EHR selon l'une quelconque des revendications précédentes.

8. Procédé pour un système EHR selon l'une quelconque des revendications 1 à 6, comprenant les étapes suivantes:
- détecter la pression du cylindre hydraulique (20) de la bielle supérieure (6),
- déterminer la force de traction agissant sur la bielle supérieure (6) à l'aide de la pression détectée, au moyen de l'appareil de commande (40),
- régler une course de l'appareil rapporté (16) à l'aide de la force de traction déterminée.

9. Procédé selon la revendication 8, dans lequel on détecte la pression du cylindre hydraulique (20) pour la détermination de la force de traction de l'appareil rapporté (16), lorsque l'appareil rapporté accouplé (16) est soulevé du sol (18) et/ou lorsque l'appareil rapporté accouplé (16) n'est pas en engagement de travail avec le sol (18) et/ou lorsque l'appareil rapporté (16) accouplé au mécanisme de levage repose essentiellement sur une surface du sol de culture (18).

10. Procédé selon la revendication 9, dans lequel on tient compte d'une face de piston (32) du piston (22) du cylindre hydraulique (20) de la bielle supérieure (6), qui limite la chambre de pression (26), dont la pression est utilisée pour le calcul de la force de traction, lors du calcul de la force de traction, et/ou dans lequel on tient compte d'un diamètre du cylindre hydraulique (20) de la bielle supérieure (6) lors du calcul de la force de traction.

11. Procédé selon l'une quelconque des revendications 8 à 10, dans lequel une longueur de la bielle supérieure (6) est prédéterminée par une personne de conduite et/ou dans lequel une longueur de la bielle supérieure (6) est détectée par l'appareil de commande (40).
